# FASCICULE DE BREVET EUROPEEN

(11) **EP 2 172 143 B1**
(45) Date de publication et mention de la délivrance du brevet: **07.12.2016**
(21) Numéro de dépôt: 09290755.9
(22) Date de dépôt: 01.10.2009
(51) Int. Cl.: A47L 15/42, D06F 33/02, D06F 39/00, H02P 8/00, H02P 29/032

(54) **Procédé de commande en déplacement d'un organe d'un appareil électroménager, notamment d'un bandeau de commande d'un four de cuisson**
Steuerverfahren zum Bewegen eines Elementes eines Elektrohaushaltgeräts, insbesondere einer Bedienblende eines Backofens
Method for controlling the movement of a component of an electrical household appliance, in particular a control panel of a baking oven

(30) Priorité: 03.10.2008 FR 0805474
(43) Date de publication de la demande: 07.04.2010
(73) Titulaire: Groupe Brandt, 92500 Rueil-Malmaison (FR)
(72) Inventeur: Genieux, Nicolas, 45000 Orléans (FR); Oudart, Pascal, 45240 La Ferte Saint Aubin (FR)
(74) Mandataire: Santarelli

(56) Documents cités:
- EP-A- 0 410 086
- EP-A1- 1 403 136
- DE-A1- 19 961 083
- DE-A1-102007 033 347
- DE-U1- 8 813 044
- FR-A- 1 518 280
- FR-A- 2 894 764
- GB-A- 2 233 175

## Description

La présente invention concerne un procédé de commande en déplacement d'un organe d'un appareil électroménager.

Elle concerne également un appareil électroménager comprenant un organe mobile entre au moins deux positions de fonctionnement.

De manière générale, la présente invention concerne le déplacement d'un organe d'un appareil électroménager, mobile entre au moins deux positions, le déplacement de cet organe étant réalisé au moyen d'un moteur pas à pas.

Plus particulièrement, la présente invention trouve son application dans les appareils électroménagers domestiques, et de préférence pour un four de cuisson, éventuellement encastrable, équipé d'un bandeau de commande ou partie d'un bandeau de commande mobile en façade de ce four.

On connaît dans le document FR 2 894 764 un appareil électroménager comprenant un bandeau de commande inclinable, pouvant être orienté sur la façade de l'appareil suivant un angle d'inclinaison.

Un tel bandeau de commande permet de présenter à l'utilisateur une interface de commande, comprenant des organes de commande (bouton poussoir, bouton rotatif, touche sensitive) et des afficheurs.

Le déplacement d'un tel bandeau de commande peut notamment être réalisé par des moyens d'entraînement actionnés par un moteur.

Toutefois, il est important que cette fonction de motorisation du déplacement d'un bandeau de commande reste relativement simple et peu coûteuse à mettre en oeuvre, pour éviter de renchérir le prix de l'appareil électrique.

De plus, on connaît dans le document DE 199 61 083 A1 un appareil électroménager comprenant un élément de verrouillage dudit appareil électroménager.

La présente invention a pour but de proposer un procédé de commande en déplacement d'un organe actionné par un moteur pas à pas fiable et peu coûteux à mettre en oeuvre.

A cet égard, la présente invention vise selon un premier aspect un procédé de commande en déplacement d'un organe d'un appareil électroménager, mobile entre au moins deux positions de fonctionnement, l'organe étant déplacé par des moyens d'entrainement actionnés par un moteur pas à pas.

Selon l'invention, ce procédé de commande en déplacement comprend les étapes suivantes :
- détection d'une mise sous-tension de l'appareil électroménager;
- déplacement de l'organe vers une position de référence lors de la détection d'une mise sous-tension ledit organe étant un bandeau de commande inclinable ou un élément de verrouillage dudit appareil électroménager; et
- déplacement de l'organe vers l'une des au moins deux positions de fonctionnement par pilotage de la rotation du moteur suivant un nombre prédéfini de pas du moteur.

Un tel procédé de commande permet de piloter de manière simple un moteur pas à pas, pour déplacer un organe mobile entre au moins deux positions de fonctionnement, uniquement à partir d'un nombre prédéfini de pas angulaires de ce moteur.

En effet, grâce au déplacement de l'organe mobile vers une position de référence lorsque la mise sous tension de l'appareil électroménager est détectée, la position de départ de l'organe est toujours connue.

Le pilotage du moteur pour déplacer ensuite cet organe vers l'une ou l'autre des deux positions de fonctionnement peut ainsi être réalisé facilement, uniquement sur la base d'un nombre prédéfini de pas angulaires du moteur.

Un tel procédé de commande permet notamment de piloter le moteur sans requérir l'utilisation de capteurs de position de l'organe, pour détecter la fin de course de cet organe mobile.

La position de référence étant réinitialisée à chaque mise sous tension de l'appareil électroménager, le pilotage par un simple comptage des pas angulaires du moteur permet de commander en déplacement de manière fiable l'organe entre les différentes positions qu'il peut occuper sur l'appareil électroménager.

De préférence, la position de référence correspond à l'une desdites au moins deux positions de fonctionnement dudit organe.

La commande en déplacement de l'organe mobile est ainsi simplifiée, un même élément de commande pouvant ainsi permettre par actionnement successif d'obtenir les positions souhaitées pour l'organe mobile, à partir de la position de référence déjà connue et identifiée comme une des positions de fonctionnement de l'organe mobile.

Selon une caractéristique avantageuse de l'invention, à la mise sous-tension de l'appareil électroménager, lors du déplacement de l'organe vers la position de référence, le moteur pas à pas est alimenté par un courant limité, inférieur à un courant nominal alimentant le moteur pas à pas lors du déplacement de l'organe entre lesdites au moins deux positions de fonctionnement.

Cette solution présente l'avantage de pouvoir diminuer le couple généré par le moteur pas à pas sur les moyens d'entraînement de l'organe
mobile lorsque celui-ci est déplacé dans une position de référence.

En effet, lors de cette étape de déplacement de l'organe dans une position de référence, la position initiale de l'organe n'est pas connue de telle sorte que cet organe peut déjà être dans sa position de référence ou dans une position proche de cette position de référence.

Si un couple maximal associé au courant nominal alimentant le moteur pas à pas est appliqué à l'organe, les moyens d'entraînement peuvent
être détériorés sous l'action de ce couple moteur alors que l'organe est déjà dans sa position de référence, en fin de course de déplacement.

En diminuant le courant alimentant le moteur pas à pas, le couple moteur appliqué aux moyens d'entraînement est diminué.

Par ailleurs, l'alimentation à un courant nominal du moteur pas à pas lors du déplacement de l'organe entre lesdites au moins deux positions de fonctionnement permet de conserver un couple suffisant lors du déplacement de cet organe, notamment pour vaincre les moments d'inertie et les forces de frottement.

Selon un second aspect, la présente invention concerne un appareil électroménager comprenant un organe mobile entre au moins deux positions de fonctionnement, cet organe étant déplacé par des moyens d'entraînement actionnés par un moteur pas à pas.

Selon l'invention, l'appareil électroménager comprend des moyens de détection d'une mise sous-tension de l'appareil électroménager et des moyens de commande en déplacement de l'organe vers une position de référence lors de la détection d'une mise sous tension de l'appareil électroménager, ledit organe étant un bandeau de commande inclinable ou un élément de verrouillage dudit appareil électroménager.

Cet appareil électroménager présente des avantages analogues à ceux décrits précédemment en référence au procédé de commande en déplacement selon l'invention.

En particulier, il permet le pilotage de la rotation du moteur suivant un nombre prédéfini de pas pour le déplacement de l'organe entre ses positions de fonctionnement, dès lors que la position de départ de l'organe est toujours une position de référence prédéfinie à laquelle l'organe est placé lors de la détection d'une mise sous tension de l'appareil électroménager.

Selon une caractéristique avantageuse de l'invention, l'appareil électroménager comprend des moyens de limitation d'un courant d'alimentation du moteur pas à pas, à une valeur limitée inférieure à un courant nominal d'alimentation du moteur pas à pas.

Comme indiqué précédemment, ces moyens de limitation du courant d'alimentation du moteur pas à pas permettent notamment de diminuer le couple exercé par le moteur sur l'organe lorsque celui-ci est déplacé vers sa position de référence, quelle que soit sa position initiale lors de ce déplacement.

En pratique, l'organe est un bandeau de commande monté dans une façade d'un appareil électroménager et mobile entre au moins une position fermée dans laquelle le bandeau de commande s'étend sensiblement dans le plan de façade de l'appareil électroménager et une position inclinée par rapport au plan de façade de l'appareil électroménager.

La présente invention trouve en particulier son application lorsque l'appareil électroménager, est notamment un four de cuisson, une table de cuisson, un lave-linge et/ou un sèche-linge, ou un lave-vaisselle.

D'autres particularités et avantages de l'invention apparaîtront encore dans la description ci-après.

Aux dessins annexés, donnés à titre d'exemples non limitatifs :
- la figure 1 est une vue en perspective illustrant un four de cuisson selon un mode de réalisation de l'invention, comprenant un bandeau de commande en position fermée ;
- la figure 2 est une vue analogue à la figure 1, le bandeau de commande étant en position ouverte ;
- les figures 3 et 4 sont des vues en perspective partielles illustrant les moyens d'entraînement du bandeau de commande du four de cuisson de la figure 1, le bandeau de commande ayant été ôté à la figure 3 ;
- la figure 5 est une vue en perspective illustrant le bandeau de commande monté sur une façade du four de cuisson de la figure 1, les moyens d'entrainement ayant été ôtés ;
- la figure 6 est une vue en perspective illustrant le bandeau de commande associé aux moyens d'entraînement du four de cuisson de la figure 1 ;
- la figure 7 est un schéma électrique adapté à mettre en oeuvre le procédé de commande en déplacement selon un mode de réalisation de l'invention ;
- les figures 8 et 9 sont des courbes illustrant les variations du courant électrique circulant dans une bobine d'un moteur pas à pas selon deux modes de fonctionnement du circuit électrique de la figure 7 ; et
- la figure 10 est une vue agrandie du détail A de la courbe de la figure 9.

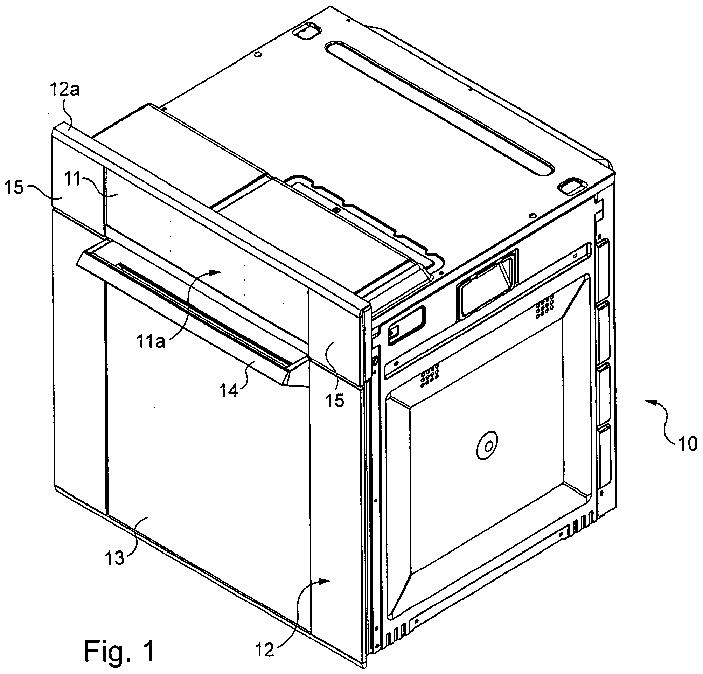

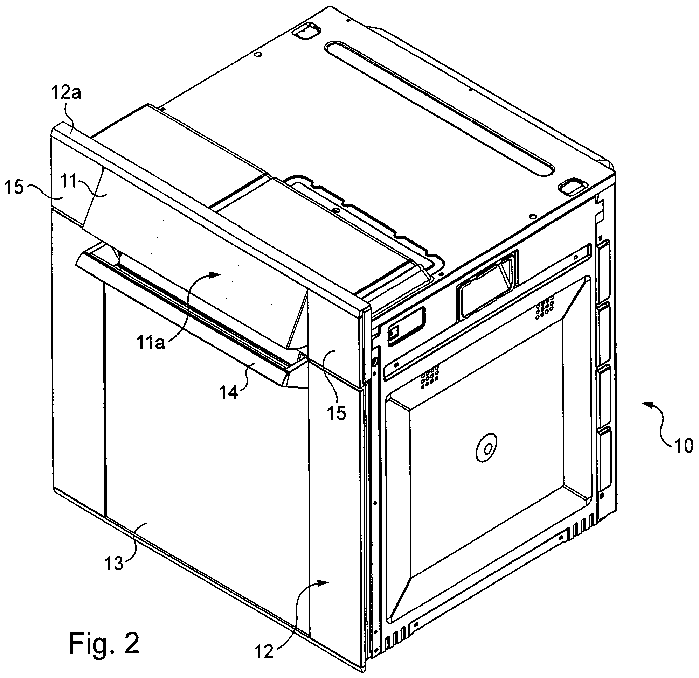

On va décrire tout d'abord en référence aux figures 1 et 2 un type d'appareil électrique adapté à mettre en oeuvre la présente invention.

Dans ce mode de réalisation, l'appareil électroménager est un four de cuisson, et par exemple, un four de cuisson électrique 10.

Bien entendu, la présente invention n'est pas limitée à ce type d'appareil mais peut s'appliquer à tout type d'appareil électroménager, et notamment une table de cuisson, une cuisinière, un lave-linge et/ou sèche linge, un lave-vaisselle.

Plus précisément, l'invention concerne un organe mobile de cet appareil électrique pouvant occuper au moins deux positions de fonctionnement.

Dans le mode de réalisation illustré aux figures 1 et 2, l'organe mobile est un bandeau de commande 11 monté dans la façade 12 du four de cuisson 10.

Ce bandeau de commande 11 est mobile entre une position fermée (voir figure 1) dans laquelle le bandeau de commande 11 s'étend sensiblement dans le plan de façade du four de cuisson 10, et une position inclinée par rapport au plan de façade du four de cuisson 10 (voir figure 2).

Ce bandeau de commande 11 peut ainsi être orienté sur la façade 12 du four de cuisson 10 pour faciliter l'interface entre l'utilisateur et le four de cuisson.

Comme illustré à la figure 2, l'inclinaison entre la face frontale 11a du bandeau de commande et la façade 12 du four forme un angle compris entre 20 et 45°, par exemple sensiblement égale à 30°.

Ce bandeau de commande est de manière classique adapté à recevoir différents organes de commande et d'affichage.

Son inclinaison permet une visualisation aisée par l'utilisateur lors de la programmation et le fonctionnement de l'appareil.

On notera en particulier que dans l'exemple illustré aux figures 1 et 2, le four de cuisson est un four du type encastrable.

L'inclinaison du bandeau de commande 11 est notamment favorable lors de la mise en place de cet appareil sous un plan de travail, évitant à l'utilisateur de se baisser pour visualiser le bandeau de commande.

De préférence, ce bandeau de commande 11 est situé dans la partie supérieure de la façade 12 de l'appareil, à proximité d'un bord supérieur 12a.

De préférence, ce bandeau de commande 11 est situé au-dessus de la porte 13 permettant d'accéder à l'enceinte de cuisson, et par exemple, dans ce mode de réalisation, au-dessus d'une poignée 14 de manipulation de la porte 13.

Ce bandeau de commande 11 est monté en pivotement dans une structure fixe 15 de la façade 12 du four 10, cette structure fixe 15 s'étendant sensiblement dans toute la largeur de la façade 12, au-dessus de la porte 13.

Cette structure fixe 15 peut également comporter des organes de commande et des afficheurs en complément de ceux présents sur le bandeau de commande 11 mobile en façade du four.

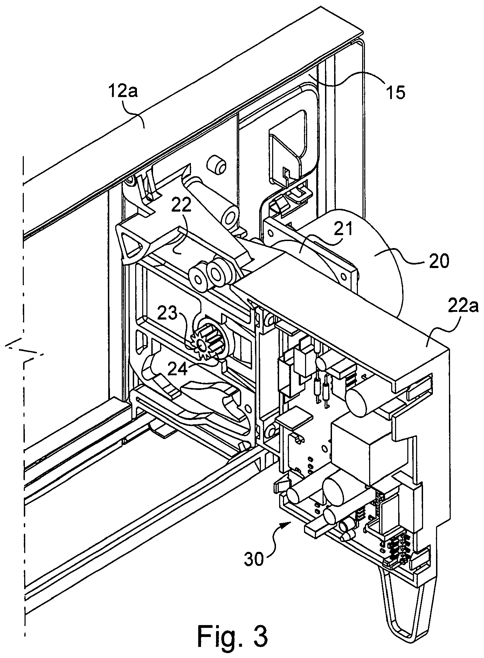

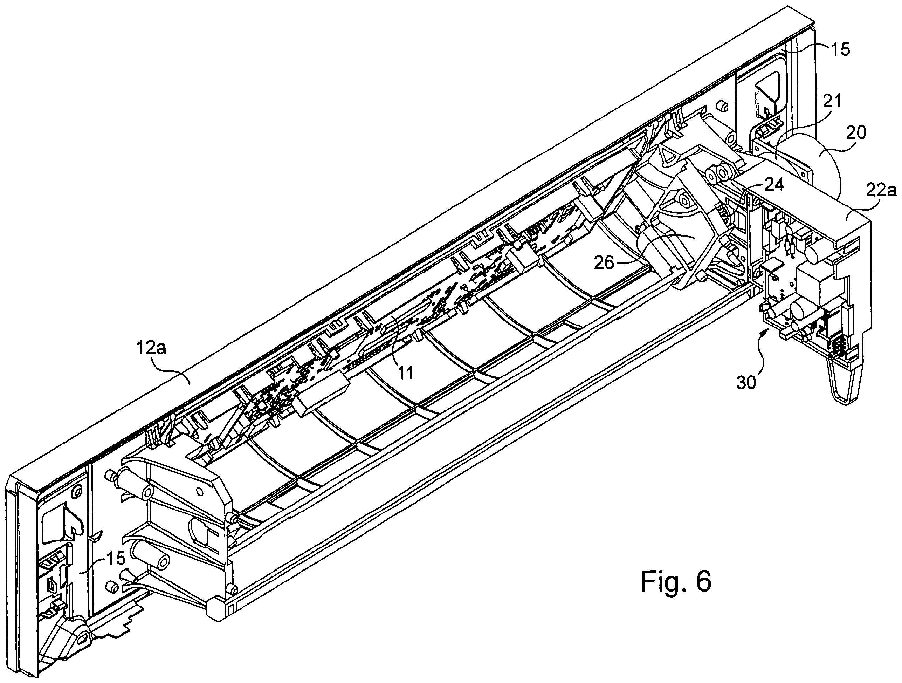

On va décrire à présent en référence aux figures 3 à 6 les moyens d'entrainement adaptés à déplacer le bandeau de commande 11 entre ses deux positions de fonctionnement.

Dans leur principe, ces moyens d'entraînement comportent un mécanisme de pignon crémaillère monté sur un axe d'un moteur pas à pas 20 au travers d'un motoréducteur 21.

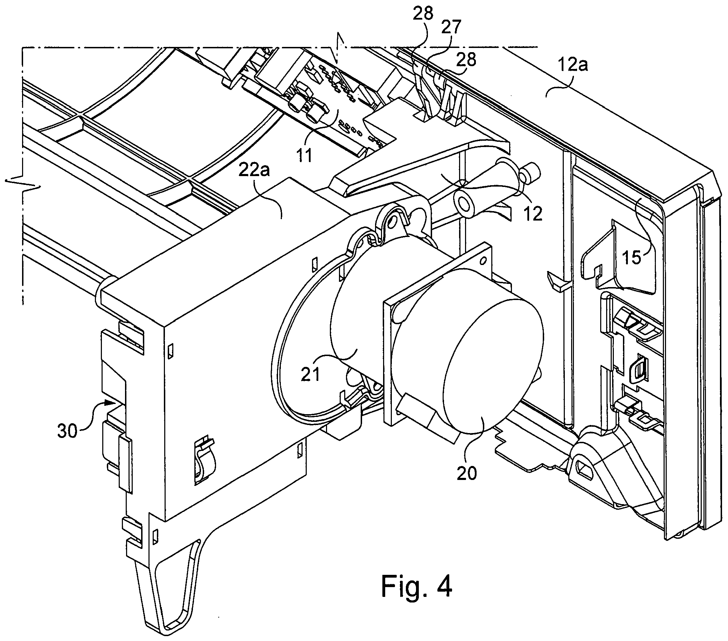

Comme bien illustré aux figures 3 et 4, le moteur 20 et son motoréducteur 21 sont montés sur une aile de fixation 22 solidaire de la façade du four de cuisson, et s'étendant vers l'intérieur de l'appareil.

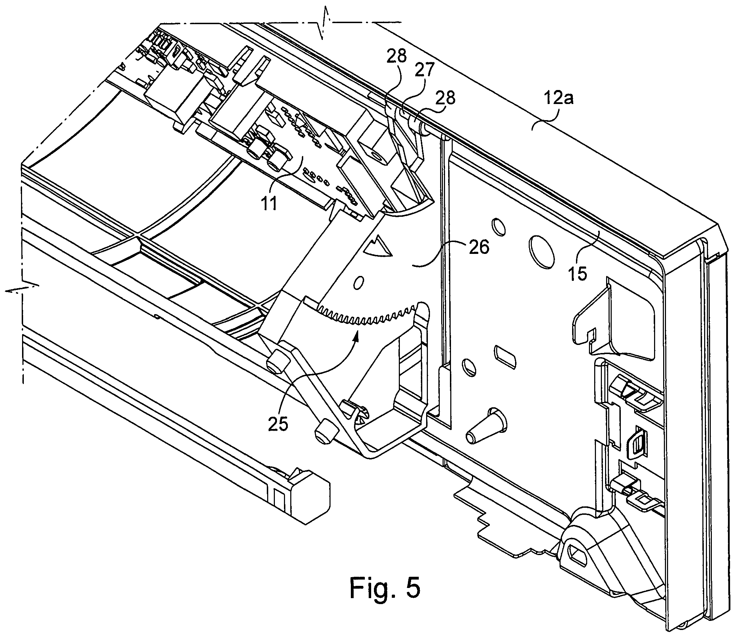

L'axe du moteur 23 entrainé en rotation est muni d'un pignon 24 adapté à engrener avec une crémaillère 25 (voir figure 5) solidaire d'une aile 26 montée sur le bandeau de commande 11.

La crémaillère 25 s'étend sur une portion d'arc de cercle dont le centre correspond à un axe 27 de rotation du bandeau de commande.

Cet axe de rotation 27 est monté en pivotement sur les paliers 28, à proximité du bord supérieur 12a de la façade du four de cuisson 10.

De manière classique, l'entraînement en rotation de l'axe 23 en sortie du moteur 20 via le motoréducteur 21 permet d'entraîner en rotation le pignon 24 et de déplacer la crémaillère 25 pour permettre le mouvement d'ouverture ou de fermeture du bandeau de commande 11.

Le montage du moteur 20, du motoréducteur 21, de l'axe 23, du pignon 24 et de la crémaillère 25 mettent en oeuvre des moyens de fixation classiques sur l'aile 22 solidaire de la façade 12, au niveau de la structure fixe 15, et sur l'aile 26 solidaire du bandeau de commande 11 et n'ont pas besoin d'être décrits plus en détail ici.

Par ailleurs, l'ensemble des moyens de commande électroniques et d'alimentation du moteur 20 sont montés sur une carte électronique 30 fixée, dans ce mode de réalisation, sur un prolongement 22a de l'aile 22, à proximité du moteur 20.

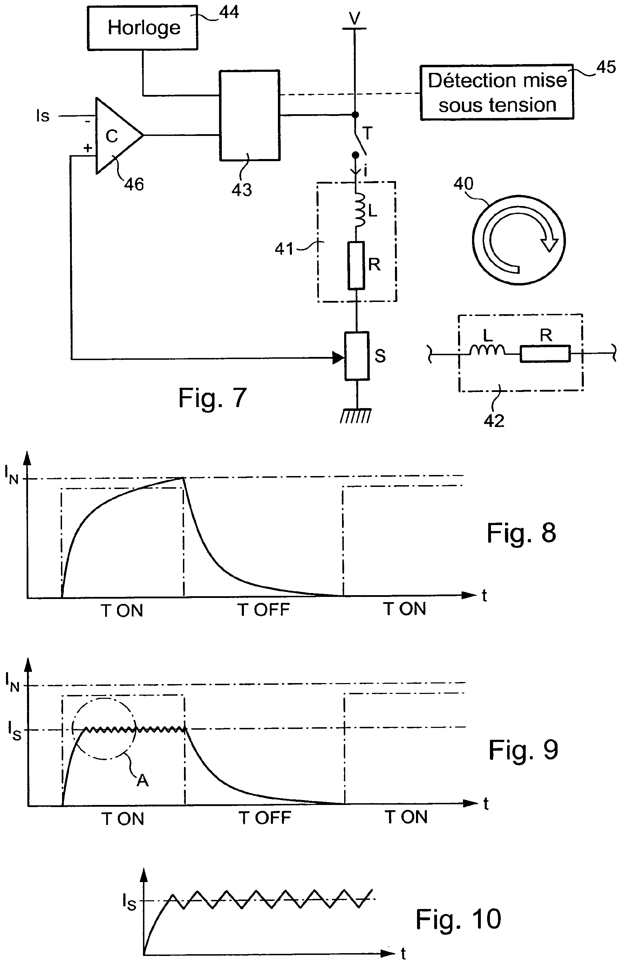

Les moyens de commande en déplacement de l'organe vont être décrits ci-après en référence à la figure 7.

On va décrire à présent en référence aux figures 7 à 10, le procédé et circuit de commande en déplacement du bandeau de commande 11.

Pour mémoire, comme illustré à la figure 7, un moteur pas à pas est constitué d'un rotor 40, ce rotor étant aimanté et placé entre un double stator, une bobine 41, 42 étant associée à chaque stator.

En alimentant alternativement l'une ou l'autre des bobines, on peut ainsi inverser l'alimentation au niveau du stator correspondant et entraîner la rotation du rotor 40 pas à pas entre les stators.

On a illustré à la figure 7, le circuit d'alimentation et de pilotage d'une des bobines 41 du moteur 20.

Bien entendu, un schéma analogue (non représenté) permet d'alimenter l'autre bobine 42 du moteur 20.

La bobine 41 caractérisée par son inductance L et sa résistance R est alimentée à partir d'une tension V.

En fonction de l'ouverture ou de la fermeture d'un interrupteur électronique T, l'intensité du courant i circulant dans la bobine 41 augmente ou diminue.

La montée en courant dans la bobine 41 du moteur pas à pas 20 est ainsi illustrée à la figure 8.

L'ouverture de l'interrupteur T est gérée par des moyens de pilotage électroniques 43 à partir d'une horloge 44 générant des impulsions pour l'ouverture et la fermeture alternative des interrupteurs T montés sur chaque circuit d'alimentation des bobines 41, 42 du moteur 20.

Ces moyens de pilotage électroniques 43 et l'horloge 44 forment des moyens de commande en déplacement du bandeau de commande 11 au travers du moteur pas à pas 20.

Le fonctionnement d'un tel moteur pas à pas n'a pas besoin d'être décrit plus en détail ici.

Il peut s'agir notamment d'un moteur classique, à 48 pas par tour, correspondant au nombre de pas pour effectuer un tour complet du rotor 40 du moteur 20.

Le déplacement du bandeau de commande 11 entre ses deux positions de fonctionnement, c'est-à-dire en position fermée ou en position ouverte, est réalisé par le pilotage de la rotation du moteur 20 suivant un nombre prédéfini de pas de ce moteur 20.

Dans ce mode de réalisation et de manière nullement limitative, du fait de la présence du motoréducteur 21 entre le moteur 20 et le mécanisme d'entrainement du bandeau de commande 11, le déplacement du bandeau de commande 11 de l'une à l'autre des positions de fonctionnement correspond à 1200 pas angulaires du moteur 20.

Le pilotage entre l'une des positions de fonctionnement jusqu'à l'autre position de fonctionnement peut ainsi être réalisé par un simple décompte des pas, selon un nombre de pas prédéfini constant, ici égal à 1200 pas.

Ce pilotage par comptage de pas permet de manière avantageuse d'éviter l'utilisation de capteurs de position ou de fin de course du bandeau de commande mobile en façade de l'appareil.

Afin d'éviter le décalage dans le compteur de pas angulaire permettant de piloter l'ouverture et la fermeture du bandeau de commande 11, le procédé de commande, prévoit lors de la détection d'une mise sous tension du four de cuisson, le déplacement du bandeau vers une position de référence.

Cette étape d'initialisation permet ainsi, à toute mise sous tension de l'appareil électrique, de positionner le bandeau de commande 11 dans une position de référence prédéterminée à partir de laquelle le pilotage par comptage de pas angulaire du déplacement du bandeau de commande pourra être réalisé de manière fiable, entre les deux positions de fonctionnement.

La mise sous tension de l'appareil électroménager intervient notamment lors de la première installation de l'appareil, mais également en cas de coupure de courant nécessitant une nouvelle mise sous tension de l'appareil.

En pratique, lors d'une coupure électrique, la dernière position du bandeau de commande (ouverte ou fermée) n'est pas mémorisée dans l'appareil.

Par ailleurs, si la coupure électrique intervient de manière intempestive alors que le bandeau de commande est mobile entre l'une ou l'autre des positions de fonctionnement, ce bandeau de commande peut être dans une position intermédiaire.

Grâce au déplacement de ce bandeau de commande dans une position de référence lors de la détection d'une nouvelle mise sous tension du four de cuisson, celui-ci peut de nouveau occuper une position de référence prédéterminée.

De préférence, cette position de référence correspond à l'une des deux positions de fonctionnement du bandeau de commande.

Dans ce mode de réalisation, la position de référence correspond à la position fermée du bandeau de commande 11 sur la façade 12 du four de cuisson.

Afin de mettre en oeuvre ce déplacement en position de référence, le four de cuisson comporte des moyens de détection 45 d'une mise sous tension de l'appareil adaptés à adresser un signal représentatif de la détection d'une mise sous tension aux moyens de pilotage électroniques 43 du moteur 20.

Ces moyens de détection 45 de mise sous tension sont généralement présents dans un four de cuisson classique et permettent d'indiquer à l'utilisateur les réglages à effectuer, et par exemple, le réglage de l'heure affichée en façade du bandeau de commande.

Les moyens de commande en déplacement du bandeau de commande 11 vers la position de référence sont alors activés de manière automatique dès la détection de la mise sous tension de l'appareil électroménager pour replacer le bandeau de commande 11 dans sa position de référence, et ici dans sa position fermée.

Lors du déplacement du bandeau de commande dans la position de référence, le moteur 20 est piloté comme indiqué précédemment suivant un nombre de pas prédéterminé, correspondant à 1200 pas dans l'exemple de réalisation.

Toutefois, si le bandeau de commande 11 est déjà dans sa position de référence, et ici dans la position fermée, ou proche de celle-ci, le couple exercé par le moteur pas à pas 20 sur le mécanisme d'entraînement risque de
détériorer, voire de casser celui-ci, lorsque le bandeau de commande 11 est en bout de course dans sa position de référence.

Afin d'éviter ce problème, le circuit d'alimentation tel qu'illustré à la figure 7 permet de diminuer le couple moteur exercé par le moteur pas à pas 20 lors de l'étape de déplacement du bandeau de commande 11 dans sa position de référence.

On rappelle que le couple maximal exercé par le moteur 20 est obtenu lorsque celui-ci est alimenté par une intensité nominale I_{N} correspondant au courant maximal pouvant être admis par chaque bobine 41, 42 du moteur 20.

A cette intensité I_{N}, le moteur 20 produit son couple nominal.

Du fait du poids du bandeau de commande 11, il est nécessaire d'exercer un couple relativement fort pour obtenir l'ouverture et la fermeture du bandeau de commande 11.

Par ailleurs, ce couple nominal doit être suffisant pour résister notamment à un appui intempestif de la part de l'utilisateur sur le bandeau de commande 11 lors de son ouverture.

Ce couple nominal doit également être suffisant pour vaincre les moments d'inertie et les forces de frottement s'opposant à l'ouverture ou à la fermeture du bandeau de commande 11.

A titre d'exemple, le couple maximal exercé par le moteur 20 est de l'ordre de 40 N.cm, le moment d'inertie du bandeau de commande 11 étant égal sensiblement à 26 Kg.cm².

Afin de diminuer le couple exercé par le moteur pas à pas 20 lors de l'étape de déplacement du bandeau de commande 11 dans la position de référence, le moteur pas à pas 20 est alimenté par un courant limité, inférieur au courant nominal I_{N} alimentant le moteur pas à pas 20 lors du déplacement du bandeau 11 entre ses positions de fonctionnement.

Le circuit électronique comprend ainsi des moyens de limitation 46 du courant d'alimentation du moteur pas à pas 20 en liaison avec les moyens de pilotage électroniques 43.

Afin de mettre en oeuvre cette régulation du courant d'alimentation du moteur 20 lors du déplacement du bandeau de commande 11 vers une position de référence, le circuit électronique met en oeuvre une résistance shunt S permettant de mesurer en sortie de chaque bobine 41, 42 la valeur du courant i circulant dans la bobine.

Cette valeur de courant est transmise aux moyens de limitation 46 comprenant ici un comparateur adapté à comparer le courant circulant i à une valeur de seuil I_{S} correspondant à une valeur de courant limitée, inférieure au courant nominale I_{N} et pour laquelle le couple moteur est suffisamment petit.

A titre d'exemple, cette valeur de courant limité I_{S} correspond sensiblement à un couple moteur de 10 N.cm.

La sortie du comparateur 46 est reliée aux moyens de pilotage électroniques 43 pour commander de manière alternative l'ouverture et la fermeture de l'interrupteur T en fonction du résultat de la comparaison.

De manière classique dans ce type de régulation, lorsque le courant i mesuré par la résistance shunt S est supérieur à la valeur de seuil I_{S}, l'interrupteur électronique T est ouvert.

Lorsque la valeur du courant mesurée i repasse sous la valeur de seuil I_{S}, l'interrupteur T est fermé.

Cette régulation est mise en oeuvre tant que l'horloge 44 correspond à une phase d'alimentation de la bobine 41.

Ainsi, comme bien illustré à la figure 10, le courant i circulant dans la bobine L oscille autour de la valeur seuil I_{S}, limitant ainsi le courant maximal circulant dans la bobine 41.

Bien entendu, un système analogue de régulation est mis en oeuvre sur la bobine 42.

Le couple moteur peut ainsi être limité pendant toute la phase de déplacement du bandeau de commande 11 vers la position de référence.

Après cette étape de déplacement automatique en position de référence du bandeau de commande 11, le déplacement du bandeau de commande 11 est mis en oeuvre alternativement dans l'une ou l'autre de ses positions de fonctionnement.

Le déplacement peut être commandé au moyen d'une touche de commande accessible sur le bandeau de commande 11 ou bien être commandé de manière automatique dès l'allumage ou l'extinction du four de cuisson 10.

Dans ce mode de réalisation, lors du déplacement du bandeau de commande 11, les moyens de limitation du courant 46 ne sont plus pris en compte de telle sorte que le moteur 20 est alimenté par son courant nominal I_{N} et exerce son couple maximal sur le mécanisme d'entraînement du bandeau de commande 11.

Alternativement, le couple exercé par le moteur 20 sur le bandeau de commande 11 pendant le déplacement de ce bandeau de commande 11 vers l'une ou l'autre de ses positions de fonctionnement, pourrait être modifié, par exemple pour ralentir la vitesse de pivotement du bandeau de commande 11 en début et/ou fin de course de déplacement entre ses positions de fonctionnement.

Comme dans l'étape de déplacement du bandeau de commande 11 vers une position de référence, le couple exercé par le moteur 20 peut être modifié en limitant le courant circulant dans les bobines 41, 42 du moteur pas à pas à une valeur prédéterminée de courant, par un système de régulation analogue à celui décrit précédemment en référence à la figure 7.

La détection des phases de début et de fin de course de déplacement du bandeau de commande 11 peut être réalisée par un simple décompte des pas, en fonction du nombre prédéfini de pas du moteur nécessaires au déplacement du bandeau de commande 11 de l'une à l'autre position de fonctionnement.

Dans l'exemple décrit précédemment, où le nombre de pas pour piloter le déplacement du bandeau de commande 11 est égal à 1200, les phases de début et de fin de course peuvent correspondre aux 200 premiers et derniers pas de pilotage du moteur.

Ce mode de déplacement du bandeau de commande 11 pourrait être mis en oeuvre indépendamment du déplacement du bandeau de commande 11 vers une position de référence lors de la détection d'une mise sous tension de l'appareil électrique.

Bien entendu, la présente invention n'est pas limitée aux exemples de réalisation décrits précédemment.

Ainsi, le type d'organe mobile déplacé par un moteur pas à pas mettant en oeuvre le procédé de commande décrit précédemment peut être divers.

En particulier, il peut s'agir d'un élément de verrouillage de l'appareil électrique, mobile entre une position ouverte ou fermée, et par exemple, d'un verrou de porte de four actionné notamment lors d'un fonctionnement pyrolytique d'un appareil de cuisson.

Par ailleurs, l'organe mobile peut occuper plus de deux positions de fonctionnement, l'une d'entre elles pouvant être la position de référence à laquelle l'organe mobile est positionné lors de la mise sous tension.

Ainsi, le bandeau de commande pourrait occuper différentes positions inclinées, au choix de l'utilisateur, sur la façade du four de cuisson.

## Revendications

1. Procédé de commande en déplacement d'un organe (11) d'un appareil électroménager (10) mobile entre au moins deux positions de fonctionnement, ledit organe (11) étant déplacé par des moyens d'entraînement (24, 25) actionnés par un moteur, ledit organe étant un bandeau de commande inclinable ou un élément de verrouillage dudit appareil électroménager, **caractérisé en ce que** ledit moteur est un moteur pas à pas (20) et le procédé comprend les étapes suivantes :
- détection d'une mise sous-tension de l'appareil électroménager (10) ;
- déplacement dudit organe (11) vers une position de référence lors de la détection d'une mise sous-tension;
et
- déplacement dudit organe (11) vers l'une desdites au moins deux positions de fonctionnement par pilotage de la rotation dudit moteur (20) suivant un nombre prédéfini de pas dudit moteur.

2. Procédé de commande conforme à la revendication 1, **caractérisé en ce que** ladite position de référence correspond à l'une desdites au moins deux positions de fonctionnement dudit organe.

3. Procédé de commande conforme à l'une des revendications 1 ou 2, **caractérisé en ce qu'**à la mise sous-tension de l'appareil électroménager, lors du déplacement de l'organe vers ladite position de référence, le moteur pas à pas est alimenté par un courant limité (I_{S}), inférieur à un courant nominal (I_{N}) alimentant ledit moteur pas à pas (20) lors du déplacement dudit organe (11) entre lesdites au moins deux positions de fonctionnement.

4. Appareil électroménager comprenant un organe (11) mobile entre au moins deux positions de fonctionnement, ledit organe (11) étant déplacé par des moyens d'entraînement (24, 25) actionnés par un moteur, ledit organe (11) étant un bandeau de commande inclinable ou un élément de verrouillage dudit appareil électroménager, **caractérisé en ce que** ledit moteur est un moteur pas à pas (20) et l'appareil électroménager comprend des moyens de détection (45) d'une mise sous-tension de l'appareil électroménager (10) et des moyens de commande (43, 44) en déplacement dudit organe (11) vers une position de référence lors de la détection d'une mise sous tension de l'appareil électroménager, les moyens de commande étant adaptés à déplacer ledit organe vers l'une desdites au moins deux positions de fonctionnement par pilotage de la rotation dudit moteur (20) suivant un nombre prédéfini de pas dudit moteur.

5. Appareil électroménager conforme à la revendication 4, **caractérisé en ce qu'**il comprend des moyens de limitation (46) d'un courant d'alimentation (i) du moteur pas à pas (20), à une valeur limitée (I_{S}) inférieure à un courant nominal (I_{N}) d'alimentation dudit moteur pas à pas (20).

6. Appareil électroménager conforme à l'une des revendications 4 ou 5, **caractérisé en ce que** ledit organe est un bandeau de commande (11) monté dans une façade (12) dudit appareil électroménager et mobile entre au moins une position fermée dans laquelle ledit bandeau de commande (11) s'étend sensiblement dans le plan de façade (12) de l'appareil électroménager (10) et une position inclinée par rapport audit plan de façade (12) dudit appareil électroménager (10).

7. Appareil électroménager conforme à l'une des revendications 4 à 6, **caractérisé en ce que** lesdits moyens d'entraînement comportent un mécanisme de pignon crémaillère (24, 25) monté sur l'axe (23) du moteur pas à pas (20) au travers d'un motoréducteur (21).

8. Appareil électroménager conforme à l'une des revendications 4 à 7, du type four de cuisson, table de cuisson, lave-linge et/ou sèche-linge, ou lave-vaisselle.

## Patentansprüche

1. Verfahren zur Steuerung der Bewegung eines Organs (11) eines Elektrohaushaltsgeräts (10), das zwischen mindestens zwei Betriebsstellungen beweglich ist, wobei das Organ (11) durch Antriebsmittel (24, 25) bewegt wird, die von einem Motor betätigt werden, wobei es sich bei dem Organ um eine neigbare Bedienungsblende oder um ein Element zur Verriegelung des Elektrohaushaltsgeräts handelt, **dadurch gekennzeichnet, dass** es sich bei dem Motor um einen Schrittmotor (20) handelt und das Verfahren folgende Schritte umfasst:
- Erfassen eines Einschaltens des Elektrohaushaltsgeräts (10);
- Bewegen des Organs (11) in eine Bezugsstellung bei der Erfassung eines Einschaltens; und
- Bewegen des Organs (11) in eine der mindestens zwei Betriebsstellungen durch Ansteuerung der Drehung des Motors (20) entsprechend einer vorbestimmten Schrittanzahl des Motors.

2. Steuerungsverfahren nach Anspruch 1, **dadurch gekennzeichnet, dass** die Bezugsstellung einer der mindestens zwei Betriebsstellungen des Organs entspricht.

3. Steuerungsverfahren nach einem der Ansprüche 1 oder 2, **dadurch gekennzeichnet, dass** beim Einschalten des Elektrohaushaltsgeräts beim Bewegen des Organs in die Bezugsstellung der Schrittmotor mit einem begrenzten Strom (I_{S}) gespeist wird, der geringer ist als ein Nennstrom (I_{N}), mit dem der Schrittmotor (20) beim Bewegen des Organs (11) zwischen den mindestens zwei Betriebsstellungen gespeist wird.

4. Elektrohaushaltsgerät mit einem Organ (11), das zwischen mindestens zwei Betriebsstellungen beweglich ist, wobei das Organ (11) durch Antriebsmittel (24, 25) bewegt wird, die von einem Motor betätigt werden, wobei es sich bei dem Organ (11) um eine neigbare Bedienungsblende oder um ein Element zur Verriegelung des Elektrohaushaltsgeräts handelt, **dadurch gekennzeichnet, dass** es sich bei dem Motor um einen Schrittmotor (20) handelt und das Elektrohaushaltsgerät Mittel (45) zur Erfassung eines Einschaltens des Elektrohaushaltsgeräts (10) und Mittel (43, 44) zur Steuerung der Bewegung des Organs (11) in eine Bezugsstellung bei der Erfassung eines Einschaltens des Elektrohaushaltsgeräts aufweist, wobei die Steuerungsmittel dazu geeignet sind, durch Ansteuerung der Drehung des Motors (20) entsprechend einer vorbestimmten Schrittanzahl des Motors das Organ in eine der mindestens zwei Betriebsstellungen zu bewegen.

5. Elektrohaushaltsgerät nach Anspruch 4, **dadurch gekennzeichnet, dass** es Mittel (46) zur Begrenzung eines Stroms (i) zum Speisen des Schrittmotors (20) auf einen begrenzten Wert (I_{S}) aufweist, der geringer ist als ein Nennstrom (I_{N}) zum Speisen des Schrittmotors (20).

6. Elektrohaushaltsgerät nach einem der Ansprüche 4 oder 5, **dadurch gekennzeichnet, dass** es sich bei dem Organ um eine Bedienungsblende (11) handelt, die an einer Vorderseite (12) des Elektrohaushaltsgeräts angebracht und zumindest zwischen einer geschlossenen Stellung, in der sich die Bedienungsblende (11) im Wesentlichen in der Ebene der Vorderseite (12) des Elektrohaushaltsgeräts (10) erstreckt, und einer zur Ebene der Vorderseite (12) des Elektrohaushaltsgeräts (10) geneigten Stellung beweglich ist.

7. Elektrohaushaltsgerät nach einem der Ansprüche 4 bis 6, **dadurch gekennzeichnet, dass** die Antriebsmittel einen Ritzel-Zahnstangen-Mechanismus (24, 25) aufweisen, der über einen Getriebemotor (21) an der Achse (23) des Schrittmotors (20) angebracht ist.

8. Elektrohaushaltsgerät nach einem der Ansprüche 4 bis 7, vom Typ Backofen, Herdplatte, Waschmaschine und/oder Wäschetrockener oder Geschirrspülmaschine.

## Claims

1. A control method for controlling the movement of a member (11) of a household appliance (10) that is movable between at least two operating positions, said member (11) being moved by drive means (24, 25) actuated by a motor, said member being a tiltable control panel or a locking member of said household appliance, **characterized in that** said motor is a stepper motor (20) and the method comprises the following steps:
- detecting electrical powering on of the household appliance (10);
- moving said member (11) to a reference position on detecting electrical powering on; and
- moving said member (11) to one of said at least two operating positions by controlling the rotation of said motor (20) through a predefined number of steps of said motor.

2. A control method according to claim 1, **characterized in that** said reference position corresponds to one of said at least two operating positions of said member.

3. A control method according to one of claims 1 or 2, **characterized in that** on electrically powering on the household appliance, during the movement of said member to said reference position, the stepper motor is supplied with a limited current (I_{S}), less than a nominal current (I_{N}) supplying said stepper motor (20) during the movement of said member (11) between said at least two operating positions.

4. A household appliance comprising a member (11) that is movable between at least two operating positions, said member (11) being moved by drive means (24, 25) actuated by a motor, said member (11) being a tiltable control panel or a locking member of said household appliance, **characterized in that** said motor is a stepper motor (20) and the household appliance comprises means (45) for detecting electrical powering on of the household appliance (10) and means (43, 44) for controlling movement of said member (11) to a reference position on detecting electrical powering on of said household appliance, the control means being adapted to move said member to one of said at least two operating positions by controlling the rotation of said motor (20) through a predefined number of steps of said motor.

5. A household appliance according to claim 4, **characterized in that** it comprises means (46) for limiting a supply current(i) of the stepper motor (20), to a limited value (I_{S}) less than a nominal supply current (I_{N}) of said stepper motor (20).

6. A household appliance according to one of claims 4 or 5, **characterized in that** said member is a control panel (11) mounted on a face (12) of said household appliance and movable between at least one closed position in which said control panel (11) extends substantially within the plane of the face (12) of the household appliance (10) and a position that is tilted relative to said plane of the face (12) of said household appliance (10).

7. A household appliance according to one of claims 4 to 6, **characterized in that** said drive means comprise a rack-and-pinion mechanism (24, 25) mounted on the shaft (23) of the stepper motor (20) via a motor reduction gear train (21).

8. A household appliance according to one of claims 4 to 7, of the following type: cooking oven, cooking hob, clothes washing and/or clothes drying machine, or dish-washer.
